Europäisches Patentamt

European Patent Office

Office européen des brevets

(11) Numéro de publication: **0 082 743**

**A1**

(12) # DEMANDE DE BREVET EUROPEEN

(21) Numéro de dépôt: **82400595.3**

(22) Date de dépôt: **31.03.82**

(51) Int. Cl.³: **G 11 B 23/02**

(30) Priorité: **23.12.81 FR 8124057**

(43) Date de publication de la demande:
**29.06.83 Bulletin 83/26**

(84) Etats contractants désignés:
**DE GB IT NL SE**

(71) Demandeur: **COMPAGNIE INTERNATIONALE POUR
L'INFORMATIQUE CII - HONEYWELL BULL (dite CII-HB)
94, avenue Gambetta
F-75020 Paris(FR)**

(72) Inventeur: **Droux, Jacques
26 rue du Pot d'Etain
F-78320 Le Mesnil Saint Denis(FR)**

(72) Inventeur: **Langrenne, Albert
23 bis rue Edgard Quinet
F-93 La Courneuve(FR)**

(74) Mandataire: **Gouesmel, Daniel et al,
94, avenue Gambetta
F-75020 Paris(FR)**

(54) **Cartouche pour disque(s) magnétique(s) amovible(s).**

(57) Cartouche destinée
à être insérée dans un logement approprié d'une mémoire à disques magnétiques; constituée d'une enveloppe (ENV) à l'intérieur de laquelle est placé le disque (DISC) munie d'ouvertures (F) permettant le passage de têtes de lecture/écriture des informations contenues sur le disque, un dispositif (RF) permettant d'obturer ces ouvertures lorsque la cartouche est au repos, le moyeu (MOY) du disque (DISC) comportant des moyens d'accouplement de celui-ci à des moyens d'entraînement en rotation.

Les moyens d'accouplement sont constitués par des roulements (ROUL₁, ROUL₂) sont l'axe de symétrie (AX$_r$) définit l'axe de rotation du disque (DISC).

FIG. 5

EP 0 082 743 A1

## CARTOUCHE POUR DISQUE(S) MAGNETIQUE(S) AMOVIBLE(S).

La présente invention concerne une cartouche pour disque(s) magnétique(s) amovible(s). Elle est plus particulièrement utilisée dans les mémoires à disques des systèmes de traitement de l'information.

Dans de tels systèmes, les mémoires à disques magnétiques sont de plus en plus fréquemment utilisées en raison de leur capacité de stockage et du temps relativement court mis par les têtes magnétiques d'écriture/lecture à accéder à une information contenue en un point quelconque des disques à partir du moment où elles ont reçu l'ordre d'accéder à cette information.

On sait que les disques magnétiques portent des informations sur des pistes d'enregistrement concentriques circulaires dont la largeur n'excède pas quelques dizaines de microns, et qui sont disposées sur leurs deux faces.

Pour permettre la lecture et l'écriture des informations, les têtes magnétiques sont disposées de chaque côté des disques à une distance de quelques dixièmes de microns de ceux-ci.

Les disques magnétiques sont entraînés par un moteur électrique à une vitesse de rotation constante. Dans la pratique courante, et plus particulièrement dans le cas des mémoires qui comportent un nombre limité de disques (un ou deux disques), ces mémoires ayant une relativement faible capacité de stockage (de l'ordre de d'une dizaine à quelques dizaines de millions d'octets, l'octet étant composé de huit bits, un bit étant l'unité d'information binaire égale à un ou zéro, et toute matérialisation de ce chiffre, par exemple sous forme d'enregistrement magnétique), au moins l'un de ces disques est contenu dans une cartouche amovible. Une mémoire à disques ne contient généralement qu'une seule cartouche amovible qui est remplacée par une autre dès que les opérations de lecture et/ou d'écriture concernant le disque qu'elle contient sont terminées. On voit ainsi, qu'à une même mémoire
à disques magnétiques, peut être associée une pluralité
de cartouches amovibles contenant chacune un disque magnétique .

Dans le cas où la mémoire à disque comporte deux disques
magnétiques, l'un de ceux-ci est non amovible et reste en
permanence à l'intérieur de la mémoire à disques ,(l'autre
étant contenu dans la cartouche amovible).

On connait des cartouches pour disque magnétique amovible,
dont la forme et les dimensions normalisées assurent l'inter
changeabilité, et dont la manipulation , lors de leur mise
en place dans la mémoire à disques, est extrêmement simple.
Elles permettent de plus au disque de ne pas être contaminé
par des poussières et particules quelconques lors des périodes de repos, c'est-à-dire les périodes se situant entre deux
périodes de fonctionnement dans la mémoire à disques magnétiques.
En fonctionnement , elles permettent de plus , une ventilation du disque permettant de maintenir celui-ci dans une
parfaite propreté , ce qui accroît la fiabilité de lecture des
informations contenues sur celui-ci .

Une telle cartouche pour disque magnétique amovible est
décrite et revendiquée, par exemple, dans le brevet français
N° 2.337.396 déposé par la Compagnie Honeywell Bull le
31 Décembre 1975 sous le titre "Conditionnement pour disque
magnétique" .

Une telle cartouche comprend un disque magnétique amovible
rigide de faible diamètre. Elle est relativement plate (sa
hauteur est plus de 10 fois inférieure à sa longueur ou sa
largeur) et peut être insérée dans un logement adéquat
d'une mémoire à disques . Elle est pourvue d'ouvertures
qui sont fermées pendant les périodes de repos de la
cartouche et ouvertes lorsque la cartouche est insérée
dans la mémoire à disques , de manière à permettre
le passage des têtes magnétiques d'écriture / lecture
et le déplacement de celles-ci par rapport aux différentes pistes d'enregistrement. Cette cartouche comprend des moyens permettant de coupler le moyeu du disque à des moyens d'entraînement en rotation (qui sont le plus souvent constitués d'un moteur électrique) .

Cette cartouche est caractérisée en ce que ses parois opposées sont rigides mais élastiquement déformables et bombées vers l'extérieur à l'état libre . La première paroi comporte en son centre une saillie intérieure formant une portée annulaire en regard de sa face interne et la seconde comporte une ouverture coaxiale bordée par une portée annulaire sur sa face externe . Le moyeu du disque est annulaire et porte deux collets intérieur et extérieur respectivement disposés pour engager les dites portées, mais qui sont axialement espacés d'une moindre distance que ces dernières à l'état libre , de sorte qu'au repos les parois aplaties de la cartouche assurent par rappel élastique le maintien mécanique du disque . Sa libération en service,c'est-à-dire lors de son utilisation dans la mémoire à disque, peut être obtenue par simple rapprochement des dites parois .

Les portées et les collets sont agencés de façon à assurer au repos  la fermeture étanche de la cartouche, de sorte que le moyeu du disque et le disque lui-même soient protégés des poussières .

En choisissant de manière appropriée la disposition relative des collets et leur diamètre respectif, l'auto-ventilation du  disque en service peut être assurée par l'effet centrifuge de l'air sur les deux faces du disque, ce qui permet d'une part le nettoyage de celui-ci de  poussières  ou particules parasites, et d'autre part, son refroidissement .

Ainsi qu'il a été décrit dans la demande de brevet 78.29847 déposée le 19 Octobre 1978 par la Compagnie demanderesse sous le titre " Mode d'écriture d'informations sur un support d'enregistrement magnétique", les informations sont écrites sur les disques contenus dans les cartouches amovibles de la manière suivante ; elles sont réparties à l'intérieur de secteurs circulaires égaux et adjacents une face du disque étant divisée habituellement en plusieurs dizaines de secteurs . Chaque secteur est divisé en deux aires inégales dont la plus grande comprend les données destinées à être traitées par le système de traitement de l'information auquel appartient la mémoire à disques contenant la cartouche, et l'aire la plus petite comprend des informations de repérage des pistes , informations des-tinées à être utilisées par le dispositif permettant de positionner les têtes magnétiques d'écriture et de lecture en regard des pistes du disque. Pour chaque secteur l'aire la plus petite est divisée en plusieurs zones appelées zones de référence, en nombre égal à celui des pistes chaque piste étant associée à une seule et même zone .

Il est rappelé que l'on désigne sous le nom de densité longitudinale des informations (ou encore densité linéique) le nombre d'informations par unité de longueur mesurée suivant la circonférence d'une piste du disque, et que l'on désigne sous le nom de densité radiale , le nombre de pistes par unité de longueur mesurée suivant le diamètre du disque .

La tendance actuelle du développement des mémoires à disques magnétiques est notamment d'accroître sensiblement les densités radiale et longitudinale de manière à atteindre des densités radiales de l'ordre de 150 à 400 pistes par centimètre (soit 850 à 1000 pistes par pouce : on dit encore 350 à 1000 TPI) , les densités linéiques atteintes étant de l'ordre de 2000 bits par centimètre ou encore 5000 bits par pouce (on dit encore 5000 bpi).

On montre qu'il est difficile d'obtenir pour les disques magnétiques amovibles contenus dans les cartouches , les mêmes densités longitudinale et radiale que celles d'un disque non amovible qui reste en permanence à l'intérieur d'une mémoire à disques . En effet, l'amovibilité d'un disque magnétique intervient comme un facteur de limita- tation des densités longitudinale et radiale ,en raison notamment du fait qu'il existe toujours entre les différentes cartouches pour disque magnétique amovible associées à une même mémoire à disques, des dispersions mécaniques telles que,chaque disque présente un voile différent ou encore que le centrage du disque par rapport à l'axe du moteur d'entraînement soit différent.Il en résulte des variations dans la position occupée par les têtes magnétiques du disque,se traduisant par des variations de distances entre les têtes et la couche magnétique.Cela provoque des variations d'intensité du signal électrique délivré par ces têtes d'écriture/lecture pouvant entraîner un certain nombre d'erreurs.

De plus,un facteur de limitation supplémentaire de la possibilité d'atteindre des densités rédiales (TPI) élevées,est l'existence d'un faux rond de position dû à l'accouplement entre le moyeu du disque et l'arbre du moteur d'entraînement .Ce faux rond apporte des perturbations au moment de l'écriture des informations de repérage des pistes dans les zones de référence et au moment de leur lecture. Le faux rond de position résulte des tolérances d'assemblage entre le moyeu et l'axe du moteur .Il est encore accru par les particules parasites qui s'insèrent entre les différentes pièces d'accouplement de la cartouche et de l'arbre du moteur .

Ainsi, pour obtenir des densités longitudinale et radiale aussi élevées, pour les disques amovibles que pour les disques non amovibles, il faut donc obtenir nécessairement, une amélioration des tolérances d'accouplement mécaniques en réduisant notamment le faux rond de position à trois ou quatre microns, amélioration qu'il est difficile d'obtenir avec des cartouches telles que celles décrites dans le brevet 2.337.396 précité .

La cartouche pour disque(s) magnétique(s) amovible(s) selon l'invention a pour but d'améliorer sensiblement les tolérances d'accouplement mécaniques entre le disque magnétique et les moyens d'entraînement en rotation de celui-ci.

Dans les cartouches pour disques magnétiques amovibles selon l'art antérieur, l'axe de rotation du disque magnétique est extérieur à la cartouche et est défini par l'axe du moteur d'entraînement. Dans la cartouche selon l'invention , on supprime les tolérances dûes à l'accouplement entre le moyeu du disque et l'axe d'entraînement du moteur, en montant dans la cartouche elle-même, des roulements (roulements à billes par exemple) définissant l'axe de rotation du disque magnétique : on obtient ainsi une précision de rotation, c'est-à-dire une précision de la définition de l'axe de rotation du disque magnétique de l'ordre de 3 à 4 microns . Ceci non seulement permet d'obtenir une bonne précision de rotation pendant l'utilisation de la cartouche lors des opérations de lecture, mais permet également d'effectuer l'écriture des informations de repérage des pistes par rapport au même axe de rotation, ce qui n'était pas le cas dans les cartouches selon l'art antérieur .

Selon l'invention, la cartouche pour disque(s) amovible(s) magnétique(s) destinée à être insérée dans un logement approprié d'une mémoire à disque magnétique, constituée d'une enveloppe à l'intérieur de laquelle est placé le disque, munie d'ouvertures permettant le passage de têtes de lecture/écriture des informations contenues sur le disque, comportant un dispositif permettant d'obturer ces ouvertures lorsque la cartouche est au repos, le moyeu du disque contenant des moyens d'accouplement de celui-ci à des moyens d'entraînement en rotation est caractérisée en ce que le moyeu porte des roulements dont l'axe de symétrie définit l'axe de rotation du disque.

D'autres caractéristiques et avantages de l'invention appa-raîtront dans la description suivante donnée à titre d'exemple non limitatif et en se référant aux dessins annexés .

Sur ces dessins :

- Les figures 1,2,3 : rappellent comment est constituée une cartouche pour disque(s) magnétique(s) amovible (s) selon l'art antérieur :

- Les figures 4 à 8 : représentent un premier exemple de réalisation d'une cartouche selon l'invention ;

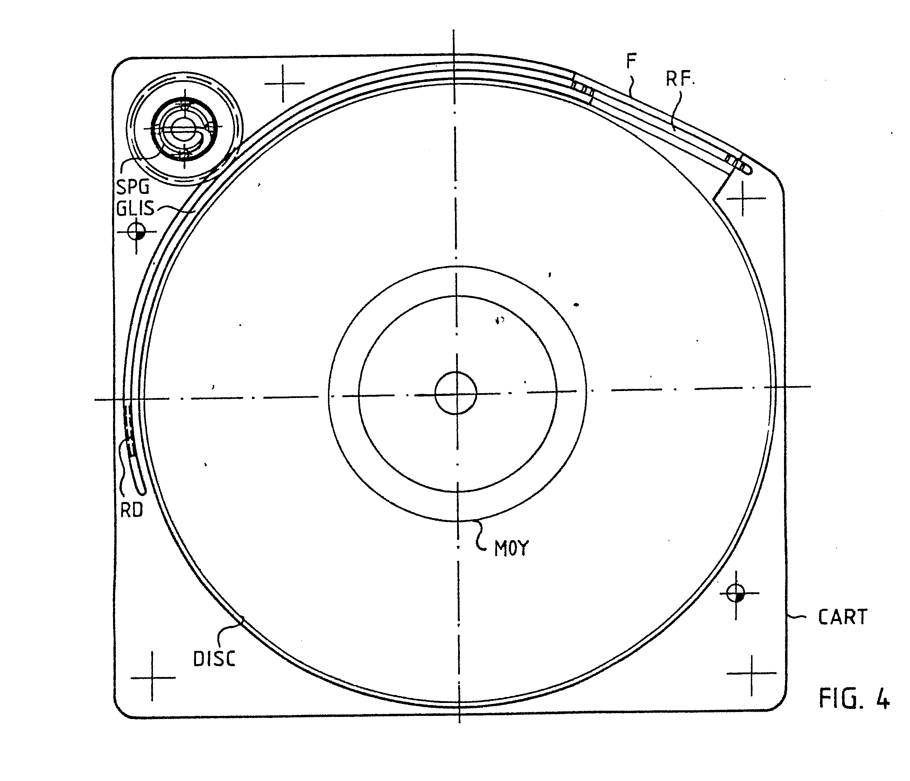

- La figure 4 : étant une vue en coupe prise dans le plan du disque magnétique ;

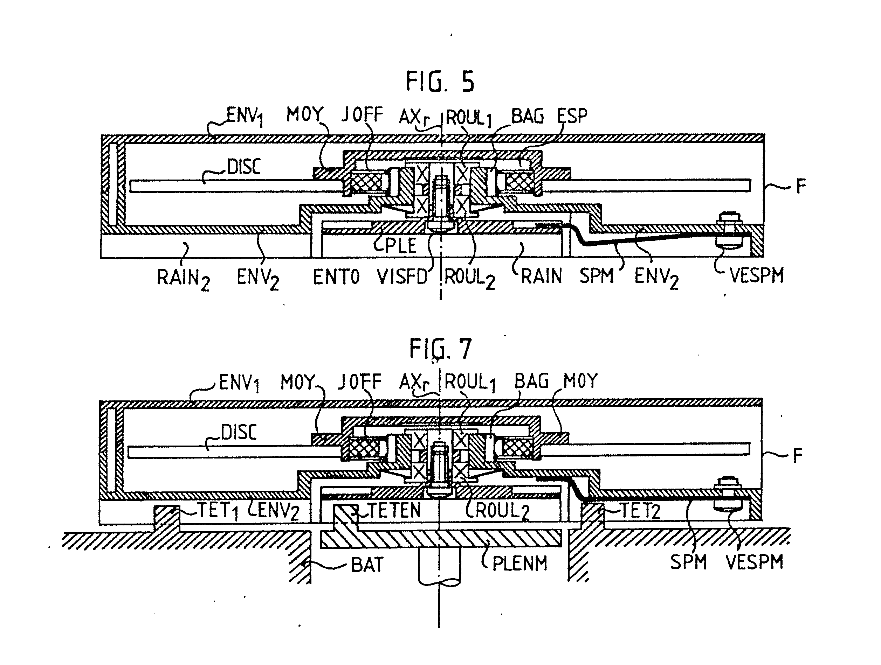

- La figure 5, étant une vue en coupe transversale prise dans un plan normal au disque magnétique montrant la cartouche dans la position qu'elle occupe lorsqu'elle est au repos .

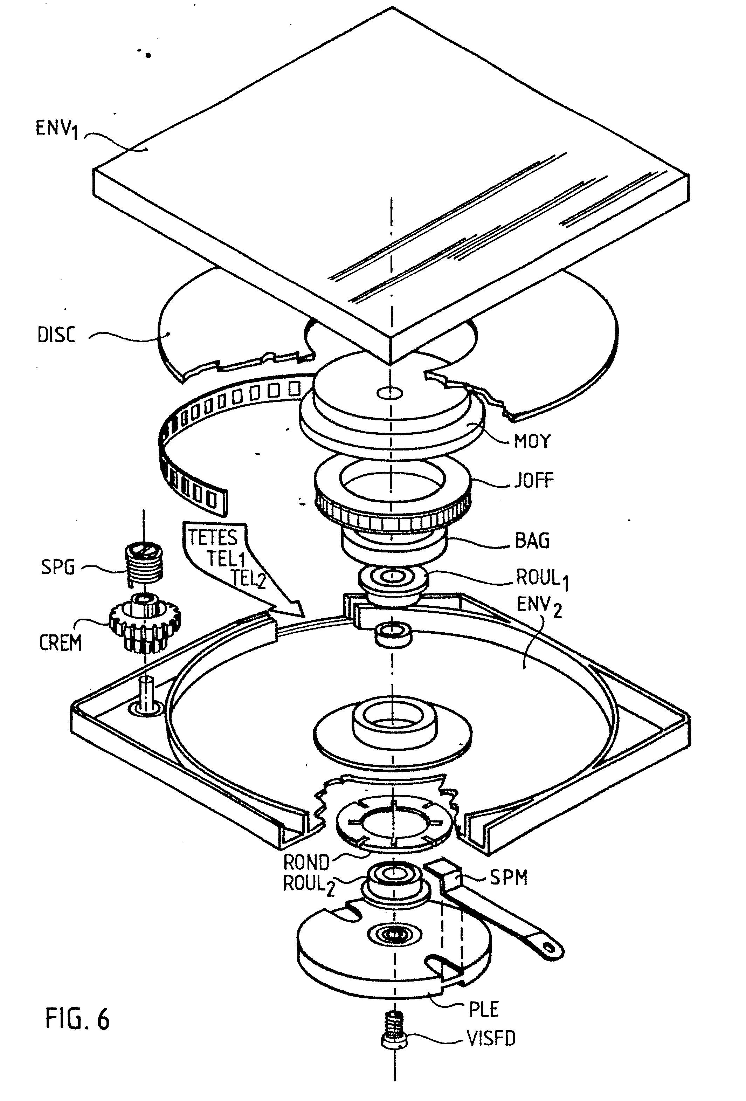

- La figure 6, étant une vue en perspective éclatée de la cartouche ;

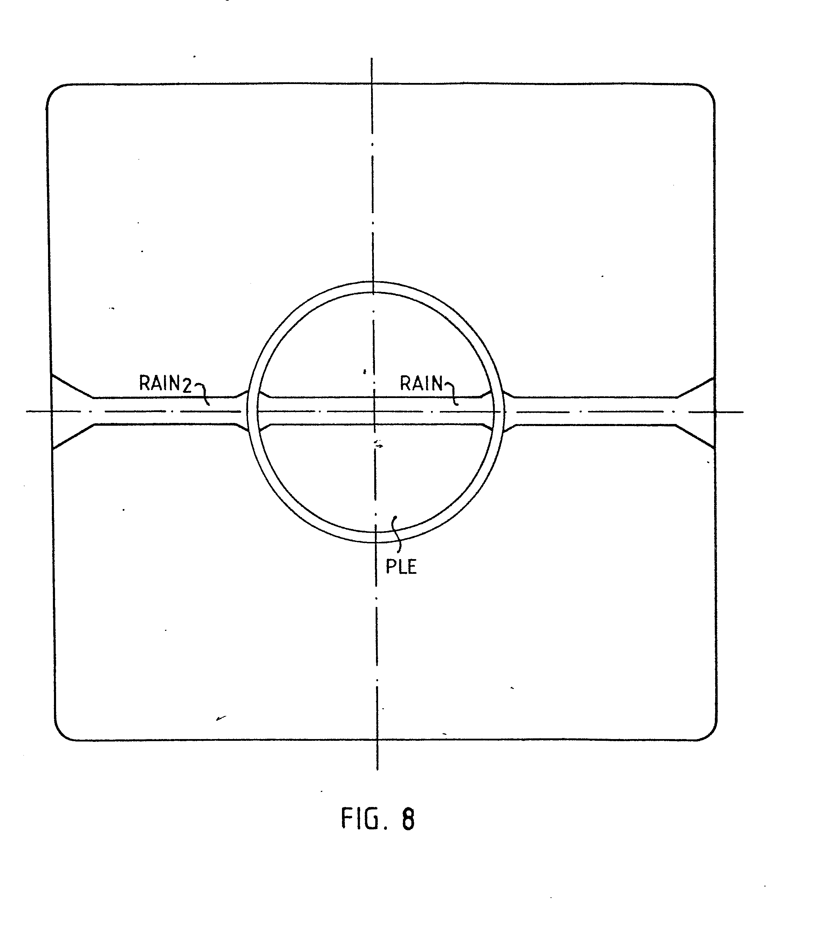

- La figure 7 : étant une vue en coupe transversale prise dans un plan normal au disque magnétique montrant la cartouche dans la position qu'elle occupe lorsqu'elle est positionnée à l'intérieur de la mémoire à disques à laquelle elle est associée .
- La figure 8 : étant une vue de dessous de la cartouche selon l'invention ;

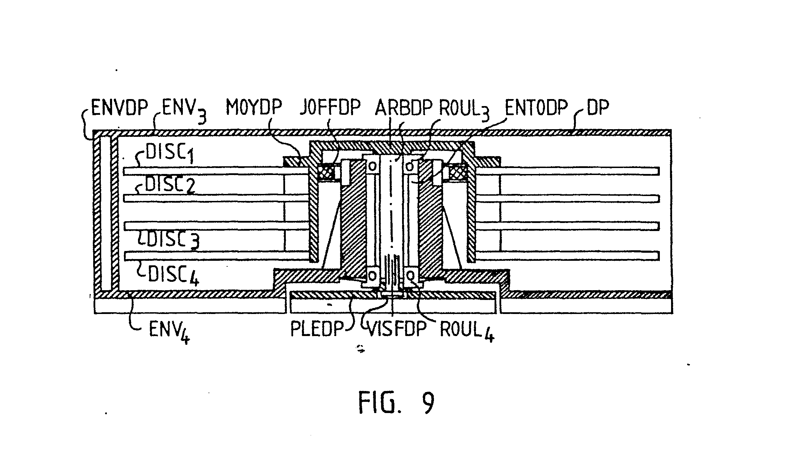

- La figure 9 : est une vue en coupe transversale montrant un second exemple de réalisation d'une cartouche selon l'invention ,comprenant 4 disques magnétiques amovibles.

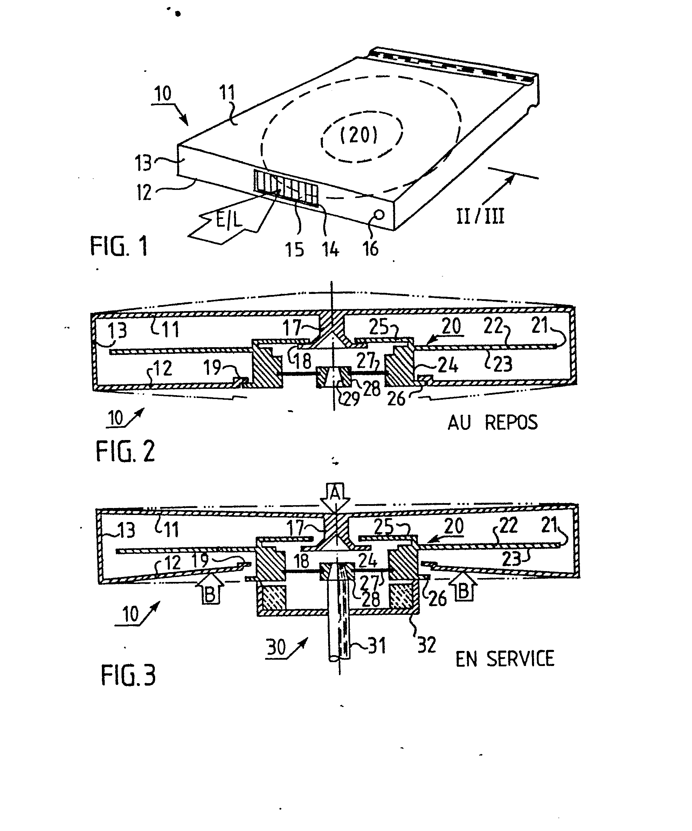

Afin de mieux comprendre les principes de constitution et de fonctionnement de la cartouche pour disque(s) magnétique(s) amovible (s) selon l'invention , il est utile de faire quelques rappels illustrés par les figures 1,2,3 sur la constitution et le principe de fonctionnement des cartouches pour disque(s) magnétique(s) amovible(s) selon l'art antérieur .

Une telle cartouche selon l'art antérieur est par exemple décrite dans le brevet N° 2.337.396 précité .

La figure 1 montre la cartouche 10 qui se présente sous la forme d'un boitier plat de contour carré dans laquelle est enfermé le disque magnétique 20. L'une des faces latérales de la cartouche comporte une fenêtre 14 qui est obturée lorsque la cartouche est au repos(c'est-à-dire lorsqu'elle n'est pas insérée dans la mémoire à disques à laquelle elle est associée ) par un volet 15. Ce dernier est manoeuvré par un mécanisme intérieur inviolable , lors de l'introduction de la cartouche dans la mémoire à disques magnétiques,de manière à ce que la fenêtre ne soit plus obturée .

Dès que le volet 15 est retiré , les têtes magnétiques d'écriture /lecture E/L symbolisées par une flèche à la figure 1 peuvent être introduites à l'intérieur de la cartouche pour y lire les données contenues sur les deux faces du disque magnétique 20.

La cartouche 10 est réalisée par un assemblage de plusieurs pièces en matériau rigide mais élastiquement déformable . A la figure 1, on a désigné par 11 et 12 les grandes parois opposées de la cartouche et par 13 la paroi latérale qui contient la fenêtre 14.

La figure 2 montre la cartouche telle qu'elle se présente pendant ses périodes de repos à l'extérieur de la mémoire à disques , périodes se situant entre deux utilisations successives à l'intérieur de celle-ci . Cette figure montre que la paroi supérieure 11 comporte en son centre une saillie intérieure 17 terminée par un collet extérieur 18 dit "anneau d'extraction" formant une portée annulaire en regard de la face interne de ladite paroi . Disposée de manière coaxiale à cette saillie, la paroi opposée 12 comporte une ouverture bordée sur sa face externe par une portée annulaire 19.

Le disque 20 comprend essentiellement une âme annulaire plate 21 dont les deux faces 22 et 23 sont recouvertes d'une couche magnétique d'enregistrement, et un moyeu annulaire 24 dont les extrémités axialement opposées portent respectivement un collet intérieur 25 engageant la portéé du collet 18 et un collet extérieur 26 engageant la portée 19 qui borde l'ouverture de la paroi 12. Dans le passage axial du moyeu 24 est rapporté un diaphragme 27 en étoiles ou percé d'ouïes , qui porte une bague de centrage 28 à trous coniques 29.

Les parois opposées 11 et 12 de la cartouche sont maintenues sensiblement planes et parallèle (comme indiqué en traits pleins)alors que par construction,elles tendent à prendre du fait de leur élasticité , la forme bombée vers l'extérieur montrée en traits mixtes. Il s'en suit l'existence d'une d'une force axiale de rappel élastique exercée sur ces parois 11 et 12 qui assure le maintien en place du disque 20 dans la cartouche 10 lors des périodes de repos (de stockage) et l'étanchéité des jonctions entre les collets 25 et 26 et les portées 18 et 19.

La figure 3 montre la position occupée par le disque 20 à l'intérieur de la cartouche 10 lorsque celle-ci est insérée à l'intérieur de la mémoire à disques à laquelle elle est associée . Les parois 11 et 12 sont alors rapprochées (comparer les tracés en traits mixtes qui montrent la position occupée par les parois lors du stockage et en traits pleins lors de l'insertion dans la mémoire à disques). Il s'en suit que les collets 25 et 26 du moyeu du disque 20 sont dégagés des portées 18 et 19 de la cartouche 10 ce qui permet l'entraînement en rotation du disque et le nettoyage et la ventilation de celui-ci .

L'entraînement du disque est assuré par couplage entre son moyeu 24 et un ensemble moteur (de préférence le moteur peut être un moteur électrique ) 30 comprenant un arbre 31 à tête conique qui s'engage dans la bague de centrage 23 et un plateau 32 engageant le collet 26 ou l'extrémité correspondante du moyeu . Ce plateau est ajouré et pourvu de moyens assurant le couplage magnétique , entre le moyeu et les moyens d'entraînement du disque .

On voit que l'axe de rotation du disque 20 est défini par l'axe de rotation des moyens d'entraînement, à savoir l'axe de symétrie de l'arbre 31. Il en résulte les conséquences suivantes :

Généralement, les informations de repérage des pistes qui sont contenues dans les zones de référence associées à chacune des pistes et ce pour chacun des secteurs contenus sur le disque magnétique 20, sont écrites au moyen d'une mémoire à disques spéciale appelée "formatteur".L'axe de rotation du disque magnétique 20 lors de ses opérations d'écriture des informations de repérage des pistes ,

est défini par l'axe de symétrie de l'arbre d'entraînement de ce formateur . Par contre, l'axe de rotation du disque 20 lors des opérations de lecture, est défini par l'axe de symétrie de l'arbre d'entraînement de la mémoire à disques dans laquelle est insérée la cartouche 10. En raison des tolérances d'accouplement mécaniques entre l'arbre d'entraînement 31, soit du formateur soit de la mémoire à disques dans laquelle est insérée la cartouche, et la bague de centrage 28 à trous coniques 29, on voit que les axes de rotation du disque à l'écriture et à la lecture ne coïncident pas et peuvent être distants de plusieurs microns de ce qui correspond aux tolérances d'accouplement mécaniques. Lorsque l'on cherche à atteindre des densités radiales de l'ordre de quelques centaines de pistes par centimètre, la largeur des informations est de l'ordre de celle qui sépare les axes de rotation du disque à la lecture et à l'écriture,ce qui peut provoquer des erreurs de lecture des informations de repérage des  pistes et par conséquent des erreurs dans le positionnement des têtes magnétiques au-dessus des pistes du disque .

La cartouche CART selon l'invention qui est représentée aux figures 4 à 8 permet de remédier à ces inconvénients . Elle comprend un disque DISC dont le moyeu est  MOY.
La cartouche CART porte une fenêtre F par où peuvent être introduites les têtes magnétiques d'écriture / Lecture telles que $TEL_1$ et $TEL_2$ et leurs bras supports $BS_1$ et $BS_2$ (voir également figures  5 et 7), lorsque la cartouche est insérée dans la mémoire à disques  à laquelle elle est associée .

La cartouche CART comporte un rideau-fenêtre RF de forme circulaire pouvant coulisser à l'intérieur d'une glissière GLIS. Ce rideau -fenêtre est solidaire d'un ressort de rappel SPG, monté sur l'axe d'entraînement d'une roue à crémaillère CREM (figures  4 et 6) .

De préférence, la cartouche CART comprend deux demi-enveloppes $ENV_1$ et $ENV_2$ dont la réunion forme l'enveloppe ENV. Cette enveloppe est de préférence réalisée en un matériau plastique relativement rigide .

Selon l'un des aspects essentiels de l'invention, le moyeu MOY de la cartouche CART comprend des roulements $ROUL_1$ et $ROUL_2$.Dans la forme de réalisation préférée de la cartouche montrée aux figs.5 et 6,ils sont contenusdans la seule demi-enveloppe $ENV_2$.L'élasticité des parois des enveloppes $ENV_1$ et $ENV_2$ est utilisée pour rattraper le jeu mécanique des roulements $ROUL_1$ et $ROUL_2$. Ces roulements sont des roulements de haute précision du type de ceux fabriqués par la société française A.D.R (filiale S.K.F)et utilisés par exemple,dans les gyroscopes.Dans une autre forme de réalisation,chaque demi-enveloppes $ENV_1$ et $ENV_2$ contient un roulement($ROUL_1$pour $ENV_1$-$ROUL_2$ pour $ENV_2$).La cartouche CART comprend aussi un joint ferro-fluidique disposé entre le moyeu MOY et la paroi interne de l'enveloppe $ENV_2$ , une bague BAG étant placée entre le joint et cette paroi ainsi qu'on peut le voir aux figures 5 et 6 . Le but de ce joint ferro fluidique est d'éviter que les poussières issues des roulements (provenant par exemple des produits de lubrification de ceux-ci ), ne viennent polluer l'atmosphère dans laquelle est situé le disque DISC. Ainsi qu'on peut le voir aux figures 5 et 6 , ces poussières sont confinées dans l'espace ESP.Ce joint est fabriqué pa rla société américaine Ferrofluidic S.A . Une entretoise ENTO est disposée entre les deux roulements $ROUL_1$ et $ROUL_2$.

La cartouche comprend un plateau d'entraînement du disque PLE muni d'une rainure RAIN (voir également figure 7), l'enveloppe $ENV_2$ étant également munie d'une rainure $RAIN_2$ qui se trouve dans le prolongement de la rainure RAIN (elle a même largeur et même profondeur)dès l'insertion de la cartouche dans la mémoire à disques (voir figure 7).

La liaison mécanique entre le plateau d'entraînement PLE et le moyeu MOY est assurée par la vis de fixation VISFD du disque DISC.

12

La cartouche CART comprend également un ressort SPM fixé sur l'enveloppe $ENV_2$ au moyen de l'ensemble vis-écrou VESPM.

Ainsi qu'on peut le voir à 1 afigure 6, lorsque l'on introduit la cartouche CART dans la mémoire à disques à laquelle elle est associée ,mémoire à disques dont le bâti est désigné par BAT, deux têtons de positionnement disposés sur ce bâti ,$TET_1$ et $TET_2$ sont disposés à l'intérieur dela rainure $RAIN_2$. Ces têtons de positionnement sont de forme cylindrique et leur diamètre est sensiblement égal à la largeur de la rainure .

Ainsi qu'on peut le voir à la figure 6, le têton $TET_2$ vient plaquer le ressort SPM contre la paroi de l'enveloppe $ENV_2$ de sorte que ce dernier vienne livérer le plateau d'entraînement PLENM rendant ainsi possible la rotation de celui-ci .

De même que les têtons $TET_1$ et $TET_2$ du bâti BAT viennent s'engager dans la rainure $RAIN_2$ de l'enveloppe $ENV_2$, le plateau d'entraînement PLENM du moteur d'entraînement (non représenté pour simplifier la figure 6) du disque DISC, comporte un têton d'entraînement TETEN qui vient s'engager dans la rainure RAIN du plateau d'entraînement PLE du disque DISC. Ce têton est muni d'un manchon plastique souple pouvant glisser légèrement ,tout en étant serré dans la rainure du plateau PLE,afin d'éviter les jeux mécaniques dans l'accouplement entre les deux plateaux et diminuer ainsi les risques de vibration lorsque le disque DISC est en rotation.

Il est clair que,lors de l' insertion de la cartouche CART dans la mémoire à disques dont le bâti BAT est représenté à la figure 6, le rideau-fenêtre RF est ouvert au moyen d'une pièce fixe qui appartient à ce bâti , pièce fixe non représentée pour simplifier à la figure 6. Elle vient agir sur la crémaillère CREM et donc sur le ressort SPG qui maintient le rideau fenêtre RF dans la position indiquée en pointillés à la figure 4. Ainsi qu'il a été dit plus haut ; les têtes magnétiques de lecture et d'écriture $TEL_1$ et $TEL_2$ peuvent alors être introduites dans la cartouche CART.

Un des avantages de l'invention est que l'axe de rotation du disque est défini par l'axe des roulements , à savoir l'axe $AX_r$ représenté aux figures 5 et 6 . Cela a les conséquences suivantes :

- lors des opérations d'écriture des informations de repérage des pistes contenues dans les zones de référence du disque DISC, ces informations sont écrites sur le disque avec l'axe de rotation $AX_r$. De même lors des opérations de lecture c'est-à-dire lorsque la cartouche CART se trouve dans une mémoire à disques, et non plus dans un formateur comme lors des opérations d'écriture, l'axe de rotation du disque est également l'axe $AX_r$. On obtient ainsi une précision de rotation de l'ordre de trois ou quatre microns, précision qui est inférieure à la largeur radiale des informations de repérage des pistes obtenue avec les densités radiales qui sont désormais couramment utilisées . La cartouche selon l'invention permet donc d'améliorer très sensiblement la précision d'écriture et de lecture des informations de repérage des pistes (et également des données destinées à être traitées par le système de traitement de l'information auquel appartient la mémoire à disques ).

Un autre avantage de la cartouche selon l'invention est la simplicité avec laquelle cette cartouche peut être insérée dans la mémoire à disques, l'insertion se déroulant en une seule opération .

Il est clair que la cartouche CART comporte également un dispositif de ventilation particulier(qui n'est pas représenté aux figures 4 à 7 pour simplifier), permettant la ventilation et le nettoyage des poussières et particules parasites qui peuvent s'introduire dans la cartouche . Ce dispositif est décrit dans la demande de brevet qui est conjointement déposée avec la présente demande de brevet ce jour, par la compagnie demanderesse sous le titre "Cartouche ventilée pour disques magnétiques amovible" .

La figure 9 montre un second exemple de réalisation d'une cartouche DP contenant quatre disques $DISC_1$ à $DISC_4$ amovibles , dont les principes de constitution et de fonctionnement sont strictement identiques à ceux de la cartouche CART .

Elle comprend une enveloppe ENVDP comprenant deux demi-enveloppes $ENV_3$ et $ENV_4$.

Les quatre disques $DISC_1$ à $DISC_4$ sont montés sur le même moyeu MOYDP. Ce dernier comprend des roulements de haute précision (par exemple fabriqués par A.D.R) $ROUL_3$ et $ROUL_4$ le roulement $ROUL_3$ étant contenu dans la demi-enveloppe $ENV_3$, le roulement $ROUL_4$ étant contenu dans la demi-enveloppe $ENV_4$. Ces deux roulements sont séparés par une entretoise ENTODP qui permet de limiter les jeux mécaniques internes à ceux-ci. Dans une autre forme de réalisation, seule la demi-enveloppe $ENV_4$, comprend les deux roulements $ROUL_3$ et $ROUL_4$.
La cartouche DP comprend un plateau d'entraînement PLEDP du même type que le plateau PLE de la cartouche CART. Le plateau PLEDP est rendu solidaire du moyeu MOYDP et des roulements $ROUL_3$ et $ROUL_4$ par l'intermédiaire de la vis VISFDP montée dans l'arbre ARBDP, un joint ferro-fluidique JOFFDP étant monté entre le moyeu MOYDP et la paroi interne de la demi-enveloppe $ENV_4$.

Revendications de brevet :

1. Cartouche pour disque(s) magnétique(s) amovible(s) destinée à être insérée dans un logement approprié d'une mémoire à disques magnétiques constituée d'une enveloppe (ENV) à l'intérieur de laquelle est placé le disque (DISC) munie d'ouverture (F) permettant le passage de têtes de lecture /écriture des informations contenues sur le disque, un dispositif (RF) permettant d'obturer ces ouvertures lorsque la cartouche est au repos, le moyeu (MOY) du disque (DISC) comportant des moyens d'accouplement de celui-ci à des moyens d'entraînement en rotation, caractérisé en ce que le moyeu (MOY) porte des roulements (ROUL$_1$,ROUL$_2$) dont l'axe de symétrie (AX$_r$) définit l'axe de rotation du disque (DISC).

2. Cartouche selon la revendication 1, dont l'enveloppe (ENV) est composée de deux demi-enveloppes (ENV$_1$ et ENV$_2$) caractérisée en ce que la seconde demi-enveloppe (ENV$_2$) comprend deux roulements (ROUL$_1$ et ROUL$_2$).

3. Cartouche selon la revendication 1, dont l'enveloppe (ENV) est composée de deux demi-enveloppes (ENV$_1$,ENV$_2$) caractérisée en ce que la première demi-enveloppe (ENV$_1$) comprend un premier roulement (ROUL$_1$) et la seconde demi-enveloppe (ENV$_2$) comprend un second enroulement (ROUL$_2$).

4. Carouche selon l'une des revendications 1,2 ou 3, caractérisé en ce que le moyeu porte des moyens étanche (JOFF) isolant les roulements par rapport à l'espace (ESP) entourant le disque (DISC) .

5. Cartouche selon la revendication 4, caractérisée en ce que les moyens étanches (JOFF) sont constitués par un joint ferro-fluidique .

FIG. 1

FIG. 2    AU REPOS

FIG. 3    EN SERVICE

FIG. 4

SPG
GLIS

RD

DISC

MOY

F

RF.

CART

0082743

FIG. 7

FIG. 5

0082743

**FIG. 6**

FIG. 8

0082743

ENVDP ‚ENV₃  MOYDP  JOFFDP  ARBDP ROUL₃  ENTODP ‚DP

‚DISC₁

‚DISC₂

⸤DISC₃

⸤DISC₄

ENV₄       PLEDP⸣ ⸤VISFDP  ROUL₄

FIG. 9

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl ³) |
|---|---|---|---|
| | --- | | G 11 B 23/02 |
| X | US-A-3 855 623 (CHUR et al.) *Colonne 6, lignes 34-46; colonne 14, lignes 9-29; figures 3,13* | 1,3 | |
| | --- | | |
| A | US-A-4 130 845 (KULMA) *Colonne 4, lignes 5-9; figure 2* | 1,2,4 | |
| | --- | | |
| A | US-A-3 643 240 (RAISER) *Colonne 3, ligne 59-72; figure 1* | 1 | |
| | --- | | |
| A | US-A-3 843 967 (MULVANY) *Colonne 3, lignes 44-60; figures 2,3,6* | 1,2 | |
| | --- | | |
| A | US-A-3 864 747 (PEJCHA) *Colonne 4, lignes 43-60; figure 4* | 1,4 | DOMAINES TECHNIQUES RECHERCHES (Int. Cl. ³) |
| | --- | | G 11 B |
| A | US-A-4 252 328 (RAJ, et al.) *Colonne 6, ligne 36 - colonne 8, ligne 23; figures 1-4* | 4,5 | |
| | --- | | |
| D,A | FR-A-2 337 396 (HONEYWELL-BULL) | 1 | |
| | --- | | |
| D,A | FR-A-2 439 435 (HONEYWELL-BULL) | 1 | |
| | ----- | | |

| Le présent rapport de recherche a été établi pour toutes les revendications | | |
|---|---|---|
| Lieu de la recherche LA HAYE | Date d'achèvement de la recherche 04-03-1983 | Examinateur SANDRI S.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82